(19) **Europäisches Patentamt / European Patent Office / Office européen des brevets**

(11) **EP 3 067 709 A1**

(12) # DEMANDE DE BREVET EUROPEEN

(43) Date de publication:
**14.09.2016 Bulletin 2016/37**

(51) Int Cl.:
**G01S 5/16** (2006.01)    **G06T 7/00** (2006.01)

(21) Numéro de dépôt: **16160003.6**

(22) Date de dépôt: **11.03.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **13.03.2015 FR 1500507**

(71) Demandeur: **MORPHO**
**92130 Issy-Les-Moulineaux (FR)**

(72) Inventeurs:
• BEILER, Olivier
92130 Issy-les-Moulineaux (FR)
• ESCAMILLA, Pierre
92130 Issy-les-Moulineaux (FR)
• GENTRIC, Stéphane
92130 Issy-les-Moulineaux (FR)

(74) Mandataire: **Lavialle, Bruno François Stéphane et al**
**Cabinet Boettcher**
**16, rue Médéric**
**75017 Paris (FR)**

(54) **PROCÉDÉ ET DISPOSITIF DE SUIVI D'INDIVIDUS DANS UN LIEU ÉQUIPÉ DE MOYENS RÉPARTIS DE DÉTECTION**

(57)    Procédé de suivi d'individus dans un lieu équipé de caméras, le procédé comprenant les étapes de : détecter des caractéristiques représentatives d'un individu dans une première zone du lieu ; détecter des caractéristiques représentatives d'un individu dans au moins une deuxième zone et comparer ces caractéristiques représentatives avec des caractéristiques représentatives préalablement mémorisées pour déterminer si l'individu détecté dans la deuxième zone a été détecté dans d'autres zones ; confirmer la détermination à partir d'une topographie du lieu par vérification d'une cohérence d'un trajet de l'individu d'une zone à l'autre et du modèle temporel par comparaison des information temporelles de détection des caractéristiques représentatives dans les zones.

Dispositif pour la mise en oeuvre de ce procédé.

Fig. 1

**Description**

La présente invention concerne le domaine de la surveillance de lieux comme par exemple les terminaux de transport (aéroports, gares, ports), les sites militaires, les sites industriels, les lieux publics...

De tels lieux sont le plus souvent équipés d'un réseau de caméras reliées à un poste de surveillance dans lequel se trouvent un serveur d'enregistrement des images capturées par les caméras et des écrans de visualisation des images capturées par les caméras. Ceci permet à des opérateurs surveillant les écrans de pouvoir détecter des comportements suspects et d'utiliser les images enregistrées pour visualiser une scène qui s'est déroulée dans le passé.

L'un des intérêts de disposer d'un réseau de caméras réparties dans un lieu est qu'il permet de suivre le cheminement des individus dans le lieu. Ceci suppose toutefois qu'un nombre suffisant d'opérateurs soient présents dans le poste de surveillance, et ce d'autant plus que la fréquentation du lieu est importante.

Un but de l'invention est de fournir un moyen permettant de faciliter le suivi d'individus dans un lieu équipé par exemple de caméras.

A cet effet, on prévoit, selon l'invention, un procédé de détermination de trajets d'individus dans un lieu ayant des zones équipées de moyens de détection d'individus et dont certaines sont inaccessibles directement depuis d'autres zones, les moyens de détection étant reliés à une unité informatique de traitement incorporant une topographie du lieu et un modèle temporel mettant en relation un temps de parcours et au moins un trajet possible entre les zones, le procédé comprenant les étapes de :

- mémoriser dans l'unité informatique des évènements initiaux associant chacun une détection des caractéristiques représentatives d'un individu dans une première zone et une information temporelle de détection,
- répertorier dans l'unité informatique des évènements postérieurs associant chacun une détection de caractéristiques représentatives d'individu dans une autre des zones du lieu et une information temporelle de détection,
- reconstituer dans l'unité informatique un trajet de chaque individu dans le lieu depuis la première zone en agglomérant des évènements postérieurs à chaque événement initial par comparaison des caractéristiques représentatives de chaque événement postérieur avec des caractéristiques représentatives de chaque événement initial, et vérification d'une cohérence des trajets des individus d'une zone à l'autre à partir de la topographie du lieu, du modèle temporel et des informations temporelles de détection.

La première zone est ici la première zone dans laquelle les caractéristiques représentatives dudit au moins un individu ont été détectées. Il en résulte que la première zone n'est pas forcément la même pour tous les individus. L'information temporelle de détection permet de déterminer à quel moment (heure, minute, seconde) a été capturée l'image dans laquelle les caractéristiques représentatives ont été détectées. Lorsqu'un individu est détecté dans une deuxième zone, on cherche à le reconnaître, c'est-à-dire à déterminer s'il fait partie des individus détectés au préalable dans la première zone. Cette reconnaissance est effectuée par comparaison des caractéristiques représentatives détectées dans la deuxième zone aux caractéristiques mémorisées. Lors de la reconnaissance, il est tenu compte de la topographie du lieu, c'est-à-dire des trajets possibles entre les zones, et du temps écoulé entre la détection des caractéristiques représentatives dans la première zone et la détection des caractéristiques représentatives dans la deuxième zone (si la deuxième zone n'est pas matériellement atteignable depuis la première zone en moins d'un temps prédéterminé, un individu détecté dans la première zone ne peut se trouver dans la deuxième zone qu'une fois ce temps écoulé). La prise en compte de la topographie du lieu et du modèle temporel permet de renforcer la fiabilité de la reconnaissance.

Lorsqu'au moins un événement postérieur, dit résiduel, n'a pu être aggloméré pour former un trajet reconstitué l'intégrant, le procédé comprend les étapes ultérieures de : identifier des trajets reconstitués considérés comme incomplet à partir de la topographie du lieu, déterminer une probabilité que l'évènement postérieur résiduel suive le dernier évènement postérieur de chaque trajet reconstitué et d'agglomérer l'évènement postérieur résiduel à un des trajets reconstitués en fonction de cette probabilité.

Ce cas se présente par exemple lorsque la zone de l'évènement postérieur résiduel ne peut en théorie pas être atteinte sans que l'individu ait été détecté dans une zone intermédiaire située entre la zone de l'évènement postérieur résiduel et la zone du dernier événement postérieur de chaque trajet reconstitué. Il se peut en effet que la détection n'ait pas fonctionné lors du passage de l'individu dans la zone intermédiaire par exemple parce que le capteur était défaillant à ce moment-là, que l'individu a été masqué par un autre ou que l'individu ne soit pas rentré dans le champ d'une caméra mobile. Le procédé de l'invention permet de tenir compte de ces situations. En particulier, la connaissance de la topographie réelle du lieu permet de détecter, de manière certaine, des trajets incomplets et ultérieurement d'y rattacher des évènements postérieurs résiduels.

Avantageusement, lors des étapes ultérieures, à partir de la topographie sont recherchés des chemins pouvant amener un individu à la zone de l'évènement postérieur résiduel en partant de la zone du dernier événement postérieur de chaque trajet reconstitué et une densité de probabilités est calculée pour l'ensemble de ces chemins.

L'invention a également pour objet un dispositif pour la mise en oeuvre de ce procédé.

D'autres caractéristiques et avantages de l'invention ressortiront à la lecture de la description qui suit de modes de réalisation particuliers non limitatifs de l'invention.

Il sera fait référence aux dessins annexés, parmi lesquels :

- la figure 1 est une vue schématique d'un lieu équipé d'un dispositif de suivi pour la mise en oeuvre de l'invention ;
- la figure 2 est un vue d'une topographie représentative du lieu et exploitable pour la mise en oeuvre de l'invention.

En référence aux figures, l'invention est ici décrite en application à la surveillance d'un lieu L, ici sous la forme d'un hangar, ayant des zones Z0, Z1, Z2, Z3, Z4, formant des halls dans le lieu L. La zone Z0 est un hall d'entrée du lieu L et la zone Z4 est le hall de sortie du lieu L. La zone Z0 communique avec les zones Z1, Z2, Z3 d'une part et avec l'extérieur du lieu L d'autre part. La zone Z1 communique avec les zones Z0 et Z4. La zone Z2 communique avec les zones Z0 et Z4. La zone Z3 communique avec les zones Z0 et Z4. La zone Z4 communique avec la zone Z1, la zone Z2 et la zone Z3. On note que : la zone Z4 est inaccessible directement depuis la zone Z0 et inversement ; la zone Z3 est inaccessible directement depuis la zone Z1 et inversement.

Chacune des zones Z0, Z1, Z2, Z3, Z4 est équipée d'au moins une caméra C0, C1, C2, C3, C4 agencée pour capturer des images des individus évoluant dans les zones Z0, Z1, Z2, Z3, Z4, images qui soient suffisamment définies pour qu'on puisse détecter des caractéristiques représentatives des individus se trouvant sur les images. Ces caractéristiques représentatives comprennent par exemple les vêtements, la coiffure, toutes caractéristiques biométriques dont notamment les lignes du visage. Dans la zone Z1, la caméra C1 est de préférence disposée au voisinage de l'entrée, d'un comptoir d'accueil ou de contrôle d'accès où tout individu pénétrant dans le lieu L est forcé de passer et éventuellement de présenter au moins un document attestant son identité ou une autorisation d'accès : on est donc assuré d'avoir une image de tout individu étant régulièrement entré dans le lieu L. De la même manière, la caméra C7 est de préférence disposée près de la sortie pour capturer des images de tout individu quittant régulièrement le lieu L.

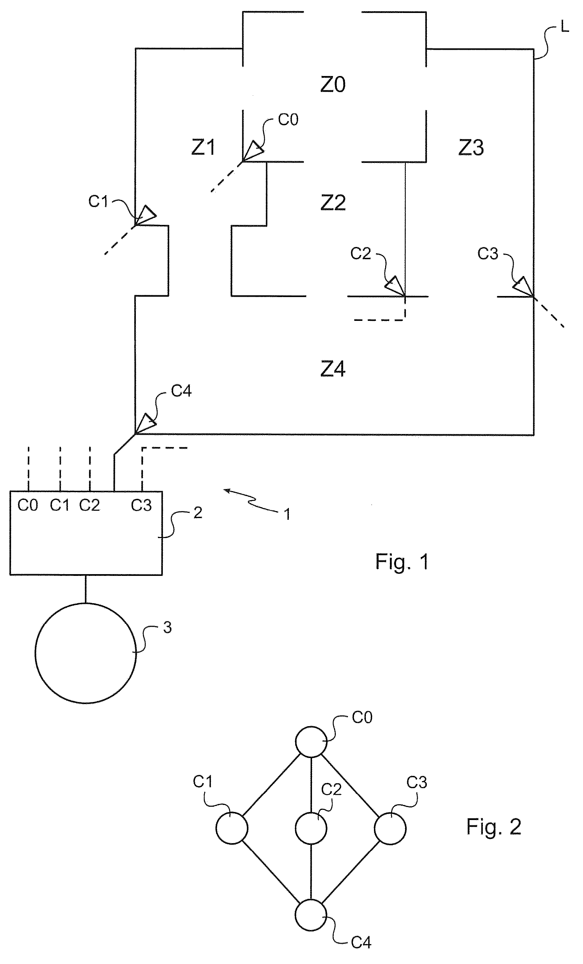

Le procédé de l'invention est mis en oeuvre au moyen d'un dispositif de suivi, généralement désigné en 1, comprenant une unité informatique de traitement 2 qui est reliée aux caméras C0, C1, C2, C3, C4 et qui est agencée pour traiter des données transmises par les caméras C0, C1, C2, C3, C4. L'unité de traitement 2 a une mémoire 3 contenant une topographie du lieu L (représentée schématiquement sur la figure 2) et un modèle temporel mettant en relation des temps de parcours moyens et des trajets entre les différentes zones Z0, Z1, Z2, Z3, Z4. La topographie enregistrée est conforme à la topographie réelle du lieu et est enregistrée préalablement dans l'unité de traitement et si besoin mise à jour ponctuellement ou périodiquement. Le modèle temporel est basé par exemple sur une courbe gaussienne centrée sur un temps de parcours moyen sur chaque trajet.

L'unité de traitement exécute un programme informatique de suivi d'individus. Le programme analyse les images capturées par les caméras C0, C1, C2, C3, C4, images qui lui sont transmises au fur et à mesure de leur capture.

Pour chaque zone, le programme est agencé pour détecter dans les images qui lui sont transmises des caractéristiques représentatives de chaque individu qui s'y trouve et pour mémoriser ces caractéristiques en association avec une information temporelle de détection, un identifiant d'individu et un identifiant de zone. L'information temporelle de détection permet de déterminer à quel moment (heure, minute, seconde) a été capturée l'image dans laquelle les caractéristiques représentatives ont été détectées. Avant la mémorisation des caractéristiques représentatives, il est procédé à une étape de reconnaissance consistant à comparer ces caractéristiques représentatives avec des caractéristiques représentatives préalablement mémorisées pour déterminer si l'individu détecté dans ladite zone a été détecté dans d'autres zones. La comparaison est par exemple réalisée par la mise en oeuvre des techniques d'identification biométrique également appelées techniques de « matching ». Une étape de confirmation de la validation est également effectuée à partir d'une topographie du lieu par vérification d'une cohérence d'un trajet de l'individu d'une zone à l'autre et du modèle temporel par comparaison des informations temporelles de détection des caractéristiques représentatives dans les zones. Dans l'affirmative, les caractéristiques représentatives nouvellement détectées sont enregistrées en association avec l'identifiant préexistant ; dans la négative, les caractéristiques représentatives nouvellement détectées sont enregistrées en association avec un nouvel identifiant choisi arbitrairement.

En théorie, les identifiants sont créés pour les individus nouvellement détectés dans les images capturées dans la zone Z0 (il n'y a pas d'entrée dans les autres zones) et les identifiants et les données associées sont supprimées lorsqu'on détecte la sortie des individus par la zone Z4.

Il est donc possible de suivre automatiquement un individu dans ses déplacements dans le lieu L.

Un exemple particulier va maintenant être décrit pour illustrer le principe du procédé (les individus mentionnés dans l'exemple qui suit ne sont pas représentés sur la figure).

A un instant donné, la mémoire contient les données suivantes :

- identifiant I1, avec ses caractéristiques représentatives et les informations temporelles de détection en Z0 et Z1 ;
- identifiant I2, avec ses caractéristiques représentatives et les informations temporelles de détection en Z0, Z2 ;

- identifiant I3, avec ses caractéristiques représentatives et les informations temporelles de détection en Z0, Z3 ;
- identifiant I4, avec ses caractéristiques représentatives et l'information temporelle de détection en Z0.

Un individu pénètre dans la zone Z0 et apparaît sur les images capturées par la caméra C0. Ses caractéristiques représentatives sont détectées et comparées à celles mémorisées. Comme aucune ne correspond, les caractéristiques représentatives et l'information temporelle de détection sont mémorisées en association avec un nouvel identifiant I5. On notera que, pour aller plus vite lors de la comparaison, on aurait pu choisir d'utiliser pour la comparaison les caractéristiques des individus dernièrement détectés dans la zone Z0 ou une zone communiquant avec la zone Z0 (dans le présent exemple simplifié tous les individus sont concernés), les autres individus ne pouvant atteindre la zone Z0 directement depuis la zone dans laquelle ils ont été dernièrement détectés.

Imaginons maintenant que les caractéristiques représentatives de l'individu I1 sont proches de celles de l'individu I1 et de celles de l'individu I3. Sur des images de la zone Z4 sont détectés des caractéristiques représentatives qui sont comparées à celles mémorisées. La comparaison fait ressortir une liste de trois résultats possibles, à savoir I1, I3, I4, avec un taux de correspondance pour chacun. Il est procédé alors à une confirmation à partir de la topographie du lieu L par vérification d'une cohérence d'un trajet de l'individu d'une zone à l'autre et du modèle temporel par comparaison des informations temporelles de détection des caractéristiques représentatives dans les zones. En l'occurrence :

- I1 se trouvait dernièrement dans la zone Z1,
- I3 se trouvait dernièrement dans la zone Z3 d'où il peut accéder directement à la zone Z4,
- I4 se trouvait dernièrement dans la zone Z0 d'où il ne peut accéder directement à la zone Z4.

L'étude de la topographie du lieu L permet de diminuer la probabilité que les caractéristiques représentatives détectées dans la zone Z4 appartiennent à I4, voir d'écarter carrément cette possibilité.

Les caractéristiques représentatives ont été détectées dans la zone Z4 à l'instant t. Le temps moyen pour accéder à la zone Z4 est de 60 secondes depuis la zone Z1 et de 30 secondes depuis la zone Z3 d'après le modèle temporel. Or, les caractéristiques représentatives de I1 ont été détectées dernièrement dans la zone Z1 à t-30s et les caractéristiques représentatives de I3 ont été détectées dernièrement dans la zone Z3 à t-45s. Ainsi, la probabilité que I1 se trouve à l'instant t en zone Z4 est plus faible que la probabilité que I3 se trouve à l'instant t en zone Z4.

On notera que le procédé de l'invention peut être mis en oeuvre en temps réel, au fur et à mesure de la capture des images et de leur réception par l'unité de traitement, ou en différé sur la base d'images mémorisées précédemment.

Dans le détail, le procédé de l'invention est mis en oeuvre pour la détermination de trajets d'individus dans le lieu L et comprend les étapes de :

- mémoriser dans l'unité informatique des évènements initiaux associant chacun une détection des caractéristiques représentatives d'un individu dans une première zone et une information temporelle de détection,
- répertorier dans l'unité informatique des évènements postérieurs associant chacun une détection de caractéristiques représentatives d'individu dans une autre des zones du lieu et une information temporelle de détection,
- reconstituer dans l'unité informatique un trajet de chaque individu dans le lieu depuis la première zone en agglomérant des évènements postérieurs à chaque événement initial par comparaison des caractéristiques représentatives de chaque événement postérieur avec des caractéristiques représentatives de chaque événement initial, et vérification d'une cohérence des trajets des individus d'une zone à l'autre à partir de la topographie du lieu, du modèle temporel et des informations temporelles de détection.

Ainsi, l'unité informatique de traitement mémorise :

- pour chaque événement initial, les caractéristiques biométriques d'un individu détectées dans la zone Z0, un identifiant affecté à cet événement (ou à cet individu) et une information temporelle de détection (ici la date et l'heure de la détection) ;
- pour chaque événement postérieur, les caractéristiques biométriques d'un individu détectées dans une des zones Z1 à Z4 du lieu L, un identifiant affecté à cet événement et une information temporelle de détection (ici la date et l'heure de la détection).

La reconstitution des trajets des individus dans le lieu L depuis la zone Z0 est effectuée par un algorithme agglomérant des évènements postérieurs à chaque événement initial par :

- comparaison des caractéristiques représentatives de chaque événement postérieur avec des caractéristiques représentatives de chaque événement initial, et

- vérification d'une cohérence des trajets des individus d'une zone à l'autre à partir de la topographie du lieu, du modèle temporel et des informations temporelles de détection.

Pour effectuer la reconstitution, il est calculé trois probabilités que deux évènements E1, E2 soient liés à une même personne :

- une probabilité biométrique $p_{bio}(E_1,E_2)$ en fonction de la similarité des caractéristiques biométriques,
- une probabilité topographique $p_{topo}(E_1,E_2)$ déterminée sur la base de la topographie,
- une probabilité temporelle $P_{temps}(E_1,E_2)$ représentative d'une distribution de probabilité de temps de passage entre les deux zones.

Ces probabilités sont utilisées ensuite pour calculer une probabilité globale p qui vaut $p=(p_{bio}(E_1,E_2))^{\alpha}(p_{temps}(E_1,E_2))^{\beta}(p_{topo}(E_1,E_2))^{\gamma}$ dans laquelle les exposants $\alpha$, $\beta$, $\gamma$ permettent de pondérer les probabilités les unes par rapport aux autres.

Le procédé est mis en oeuvre en deux temps.

Dans une première phase, l'algorithme détermine une matrice permettant d'associer les différents évènements entre eux pour créer des trajets et identifier les trajets les plus probables.

Dans cette matrice, chaque ligne représente pour un événement toutes les associations possibles prenant cet événement comme événement antérieur et chacun des évènements comme événement postérieur.

Dans chaque cellule de la ligne, on indiquera 0 lorsque les deux évènements associés sont les mêmes ou la probabilité globale p que l'évènement puisse être associé à un autre évènement.

L'algorithme choisit dans chaque ligne l'association présentant la plus forte probabilité, cette probabilité devant néanmoins être supérieure à un seuil prédéterminé pour être considérée comme vraie par l'algorithme. La ligne et la colonne à l'intersection desquelles se trouve la probabilité sélectionnée sont alors remplies de 0 pour signifier qu'aucune autre association ayant le même événement de départ et le même évènement d'arrivée ne peut être retenue. Ceci est répétée jusqu'à ce qu'il ne soit plus possible de sélectionner des cellules.

En l'absence de problème de détection, il est possible d'agglomérer les évènements associés pour former des trajets reconstitués depuis un événement initial pour tous les individus dont les caractéristiques représentatives ont été détectées dans la zone Z0.

En revanche, en cas de problème de détection, il est possible que des évènements postérieurs n'aient pas pu être agglomérés à un événement initial. On a alors : des trajets reconstitués complets entre la zone Z0 et la zone Z4 ; des trajets reconstitués incomplets depuis la zone Z0 mais avec des évènements manquants ; et des évènements postérieurs ou associations d'évènements postérieurs non rattaché à un événement initial. On parle alors d'évènement postérieur résiduel pour désigner un événement seul qui n'a pu être aggloméré dans un trajet reconstitué depuis un événement initial et de trajet résiduel pour désigner une association d'évènements postérieurs qui n'a pu être aggloméré dans un trajet reconstitué depuis un événement initial. La connaissance de la topographie réelle permet de détecter de manière rapide et fiable les trajets résiduels et incomplets.

Dans une deuxième phase, l'algorithme exécute alors les étapes ultérieures de déterminer la probabilité p que l'évènement postérieur résiduel, noté $E_r$, suive le dernier événement postérieur de chaque trajet reconstitué, noté Et, et d'agglomérer l'évènement postérieur résiduel $E_r$ à un des trajets reconstitués en fonction de cette probabilité. On s'intéresse ici aux trajets reconstitués qui sont incomplets en considérant qu'aucun évènement ne manque dans les trajets reconstitués complets.

La probabilité que l'évènement postérieur résiduel suive le dernier événement postérieur Et d'un trajet reconstitué identifié lors de la première phase pour former un nouveau trajet reconstitué c est le produit de :

- la probabilité $p_{bio}$ que les caractéristiques représentatives de l'évènement postérieur $E_t$ appartiennent au même individu que les caractéristiques représentatives de l'évènement postérieur résiduel $E_r$,
- une probabilité $p_c^{topo}$ qu'un individu passe de la zone du dernier événement postérieur $E_t$ à la zone de l'évènement postérieur résiduel $E_r$ sans avoir été détecté,
- une probabilité $p_c^{T}$ qu'un individu passe de la zone du dernier événement postérieur du trajet reconstitué à la zone de l'évènement postérieur résiduel dans le temps séparant l'information temporelle du dernier évènement postérieur Et et l'information temporelle de l'évènement postérieur résiduel.

La probabilité $p_c^{topo}$ est le produit de :

- une probabilité d'erreur de détection $p_c^{FTA}$ qui représente la probabilité qu'un individu suive le trajet c sans être vu sur une zone de ce trajet connaissant le taux d'erreur de détection du système (on désigne usuellement ce taux par FTA, il est fixé par les concepteurs du système comme un compromis entre le risque de ne pas tenir compte d'une détection et le risque de tenir compte d'une fausse détection),

- une probabilité $p_c^{Flux}$ qu'un individu passe de la zone du dernier événement postérieur Et à la zone de l'évènement postérieur résiduel $E_r$ compte tenu d'un historique des trajets reconstitués.

La probabilité $p_c^{FTA}$ est calculée comme suit $p_c^{FTA} = (p_{FTA})^{N_i}$ avec $N_i$ le nombre de zones sans évènement sur le chemin c. La probabilité $p_c^{Flux}$ se calcule en fonction des probabilités de passage d'un lieu de capture à un autre $p_{C_1 \to C2}^t$ (par exemple pour la probabilité de passage devant le capteur C1 puis devant le capteur C2) qui s'obtient par observation du flux de personnes évoluant dans le lieu par le passé. On a $p_c^{Flux} = \prod_{i=0}^{N-1} p_{C_i \to C_{i+1}}^t$ désignant le capteur d'indice i). Finalement, on obtient $p_c^{topo} = (p_c^{FTA})^\gamma (p_c^{Flux})^\delta$ avec $\gamma$ et $\delta$ sont des exposants choisis pour pondérer l'importance relative des probabilités $p_c^{FTA}$ et $p_c^{Flux}$ dans le calcul de la probabilité $p_c^{topo}$.

Pour un chemin c comprenant des détections successives par les capteurs C0, Ci et CN (i variant de 1 à N-1), il est possible de calculer la probabilité qu'un individu ait parcouru celui-ci en un temps t grâce au modèle temporel. Celui-ci comprend des lois de temps entre chaque couple de zones qui communiquent (et donc chaque couple de capteurs susceptibles de détecter successivement un même individu sans passer par un autre capteur). Nous pouvons les combiner pour créer une loi par chemin en effet : $p_c^T = p_{C_1 \to C_2}^T * \dots * p_{C_{N-1} \to C_N}^T$ avec * symbolisant un produit de convolution.

L'algorithme va alors calculer la densité de probabilité $p^g(E_t, E_r)$ que les évènements $E_t$, $E_r$ soient liés compte tenu de la topographie et du modèle temporel. La densité de probabilité s'écrit : $p^g(E_t, E_r) = \sum_{c \in Ch(E_t, E_r)} p_c^T(E_t, E_r) \, p_c^{topo}$ avec **Ch($E_t$,$E_r$)** l'ensemble des chemins **c = $C_t \to C_2 \cdots C_{N-1} \to$ $C_r$** entre **$E_t$** et **$E_r$**. Il sera ici calculé en réalité :

$$p^g(E_t, E_r) = \sum_{c \in Ch(E_t, E_r)} p_c^g(E_t, E_r)$$

où

$$p_c^g(E_t, E_r) = \left(p_c^T(E_t, E_r)\right)^\beta (p_c^{FTA})^\gamma (p_c^{Flux})^\delta.$$

Comme il peut y avoir beaucoup de chemins entre Et et $E_r$ (voir une infinité dans le cas d'une topographie avec boucle), l'algorithme réalise une approximation pour accélérer les calculs. L'approximation ici retenue consiste à négliger les trajectoires de probabilités trop faibles.

Un seuil $\in$ a été sélectionné tel qu'est négligé tout chemin pour lequel $(p_c^{FTA})^\gamma (p_c^{Flux})^\delta < \epsilon$. Le seuil est choisi en fonction de l'approximation souhaitée et des capacités de calcul dont dispose le dispositif de suivi. Il en résulte que si un chemin n est négligé par l'algorithme, il en sera de même pour tout chemin qui englober ait le chemin n en le prolongeant.

L'algorithme exécute la routine suivante pour explorer tous les chemins possible entre les deux évènements et calculer la densité de probabilités **$p^g(E_t$,$E_r)$:**

1. Si **$E_t$** et **$E_r$** ne sont pas liés dans la topographie, **$p^g(E_t$,$E_r)$ = 0.** L'algorithme arrête le calcul et sinon débute l'étape 2.

2. poser **n := 0, $C_0$ := $C_t$ et $p^g(E_t, E_r)$ = 0.**

3. Pour tous les capteurs $C_{n+1}^p$ atteignables de $C_n$ et menant à $C_r$ :

    1. Si $C_{n+1}^p \neq C_r$

- calculer $(P_{C_0 \to \cdots \to C_{n+1}^p}^{FTA})^\gamma (P_{C_0 \to \cdots \to C_{n+1}^p}^{Flux})^\delta$

- Si $(P_{C_0 \to \cdots \to C_{n+1}^p}^{FTA})^\gamma (P_{C_0 \to \cdots \to C_{n+1}^p}^{Flux})^\delta > \epsilon$, alors poser n:=n+1 et $C_n := C_{n+1}^p$ puis répéter l'étape 3.

- Sinon passer à $C_{n+1}^{p+1}$.

    2. Si $C_{n+1}^p = C_r$

- Calculer $P_{C_0 \to \cdots \to C_{n+1}^p}^g (E_t, E_r) = \left(p_c^T(E_t, E_r)\right)^\beta (p_c^{FTA})^\gamma (p_c^{Flux})^\delta$.

    Si $P_{C_0 \to \cdots \to C_{n+1}^p}^g (E_t, E_r) > \epsilon$, alors $p^g(E_t, E_r) := p^g(E_t, E_r) + P_{C_0 \to \cdots \to C_{n+1}^p}^g (E_t, E_r)$

- Si $\left(p_c^T(E_t, E_r)\right)^\beta (p_c^{FTA})^\gamma (p_c^{Flux})^\delta > \epsilon$, alors poser n:=n+1 et $C_n := C_{n+1}^p$ et Répéter l'étape 3.

- Sinon passer à $C_{n+1}^{p+1}$

    4. Retourner **$p^g(E_t, E_r)$**. Fin de la routine lorsqu'ont été parcourus tous les chemins permettant d'atteindre $E_r$ depuis $E_t$.

L'algorithme peut dès lors calculer la probabilité $p_r^t$ qu'une trajectoire identifiée soit liée à un résidu à partir, d'une part, de la densité de probabilités **$p^g(E_t, E_r)$** et, d'autre part, la probabilité $p_{bio}$. Ainsi, à chaque couple Et, $E_r$, l'algorithme associe une densité de probabilités $p_r^t = (p_{bio})^\alpha p^g(E_t, E_r)$.

L'algorithme exploite alors les probabilités $p_r^t$ de la manière suivante :

1. Créer un tableau dont chaque ligne correspond à un trajet reconstitué et chaque colonne à un résidu et dans lequel chaque cellule contient la probabilité $p_r^t$ définie précédemment.

2. Sélectionner la cellule de probabilité maximum supérieure à un seuil positif prédéterminé et associer le trajet reconstitué et le résidu de la cellule sélectionnée pour former un nouveau trajet reconstitué.

3. Si aucune cellule n'est sélectionnable le processus est interrompu. Sinon, l'algorithme revient à l'étape 1 ci-dessus.

A titre d'exemple numérique, on applique la deuxième phase du procédé de l'invention à la topographie représentée en figure 2.

On choisit :

$$\alpha = \beta = \gamma = \delta = 1,$$

$$\epsilon = 10^{-14},$$

$$p_{FTA} = 5\%.$$

L'individu a mis 16 secondes pour se rendre de Z0 à Z4.

Par hypothèse,

- le modèle temporel prévoit que :

$$p_{C0\,C1\,C4}^{T}(E_t, E_r) = p_{C0\,C2\,C4}^{T}(E_t, E_r) = p_{C0\,C3\,C4}^{T}(E_t, E_r) = 1,5.10^{-6}.$$

- les lois de flux prévoient que :

$$p_{C0\,C1}^{topo} = p_{C0\,C2}^{topo} = p_{C0\,C3}^{topo} = 1/3,$$

$$p_{C1\,C4}^{topo} = p_{C2\,C4}^{topo} = p_{C3\,C4}^{topo} = 1.$$

Au début de l'algorithme, la densité de probabilités $p^g(E_t, E_r) = 0$.

On commence le calcul de la densité de probabilités en Z0 (capteur C0) et $p^g(C0) = 1$ soit supérieure à $\in$. Ce chemin étant d'intérêt, la routine d'exploration est poursuivie vers la zone Z1 pour calculer la probabilité du chemin Z0 vers Z1.

Cette probabilité pour le chemin Z0 vers Z1 est égale à $\left(p_c^{FTA}\right)^\gamma \left(p_c^{Flux}\right)^\delta = \frac{1}{3} > \epsilon$.

Comme Z1 n'est pas Z4 et que le chemin est d'intérêt, la routine d'exploration est poursuivie vers la zone Z4 pour calculer la probabilité du chemin Z0 vers Z1 vers Z4 en suivant la topographie.

On arrive finalement à

$$P_{C0 \to C1 \to C4}^{g}(E_t, E_r) = 1/3 \times 1 \times 1,15.10^{-6} \times 0,05 = 1,9.10^{-8}.$$

Cette valeur étant supérieure à $\in$, on calcule alors :

$$p^g(E_t, E_r) = p^g(E_t, E_r) + P_{C0 \to C1 \to C4}^{g}(E_t, E_r) = 0 + 1,9.10^{-8}, \text{ soit } 1,9.10^{-8}.$$

Comme il n'est pas possible de reboucler sur Z4, l'algorithme remonte en Z1 ou le seul lien est vers Z4. L'algorithme remonte alors en Z0 et recherche un nouveau chemin, qui passe par Z2 puis Z4. La probabilité pour le chemin Z0 vers Z2 est égale à $\left(p_c^{FTA}\right)^\gamma \left(p_c^{Flux}\right)^\delta = \frac{1}{3} > \epsilon$. On calcule alors :

$$P_{C0 \to C2 \to C4}^{g}(E_t, E_r) = 1/3 \times 1 \times 1,15.10^{-6} \times 0,05 = 1,9.10^{-8}$$

qui est supérieure au seuil et on calcule

$$p^g(E_t, E_r) = p^g(E_t, E_r) + P_{C0 \to C1 \to C4}^{g}(E_t, E_r) + P_{C0 \to C2 \to C4}^{g}(E_t, E_r) = 3,8.10^{-8}.$$

Comme précédemment, il n'est pas possible de reboucler sur Z4, l'algorithme remonte en Z2 ou le seul lien est vers Z4. L'algorithme remonte alors en Z0 et recherche un nouveau chemin, qui passe par Z3 puis Z4. La probabilité pour le chemin Z0 vers Z3 est égale à

$$\left(p_c^{FTA}\right)^\gamma \left(p_c^{Flux}\right)^\delta = \frac{1}{3} > \epsilon.$$

On calcule alors :

$$P^g_{C0 \to C3 \to C4} (E_t, E_r) = 1/3 \text{x} 1 \text{x} 1,15.10^{-6} \text{x} 0,05 = 1,9.10^{-8}$$

qui est supérieure au seuil et on calcule

$$p^g(E_t, E_r) = p^g(E_t, E_r) + P^g_{C0 \to C1 \to C4} (E_t, E_r) + P^g_{C0 \to C2 \to C4} (E_t, E_r)$$
$$+ P^g_{C0 \to C3 \to C4} (E_t, E_r) = 5,7.10^{-8}.$$

Comme tous les chemins ont été explorés, la routine est arrêtée et la densité de probabilités $p^g(E_t, E_r)$ vaut $5,7.10^{-8}$. C'est ce qui sera reporté dans le tableau.

Bien entendu, l'invention n'est pas limitée aux modes de mise en oeuvre décrits mais englobe toute variante entrant dans le champ de l'invention telle que définie par les revendications.

En particulier, les moyens de détection peuvent comprendre d'autres types de détecteurs comme un capteur d'empreintes digitales.

L'identifiant attribué ici de manière arbitraire peut, selon une variante, correspondre à un identifiant figurant sur un document présenté par l'individu à l'entrée du lieu (document d'identité, carte d'embarquement ou autre autorisation d'accès...).

Le modèle temporel peut être basé sur un histogramme élaboré à partir des données acquises précédemment ou toute autre loi tirée des données historiques antérieures.

Bien qu'ici les zones soient séparées physiquement les unes des autres, les zones peuvent ne pas être cloisonnées. Une zone correspond alors par exemple à la zone de couverture d'une caméra.

Les moyens de détection peuvent comprendre plusieurs capteurs biométriques, les capteurs biométriques étant de types différents pour capturer des caractéristiques biométriques de types différents avec par exemple : un détecteur d'empreintes digitales et un détecteur de visage dans une zone d'entrée, un détecteur d'empreintes digitales dans une des zones suivantes et un détecteur de visage dans une autre des zones suivantes.

## Revendications

1. Procédé de détermination de trajets d'individus dans un lieu ayant des zones équipées de moyens de détection d'individus et dont certaines sont inaccessibles directement depuis d'autres zones, les moyens de détection étant reliés à une unité informatique de traitement incorporant une topographie du lieu et un modèle temporel mettant en relation un temps de parcours et au moins un trajet entre les zones, le procédé comprenant les étapes de :

   - mémoriser dans l'unité informatique des évènements initiaux associant chacun une détection des caractéristiques représentatives d'un individu dans une première zone et une information temporelle de détection,
   - répertorier dans l'unité informatique des évènements postérieurs associant chacun une détection de caractéristiques représentatives d'individu dans une autre des zones du lieu et une information temporelle de détection,
   - reconstituer dans l'unité informatique un trajet de chaque individu dans le lieu depuis la première zone en agglomérant des évènements postérieurs à chaque événement initial par comparaison des caractéristiques représentatives de chaque événement postérieur avec des caractéristiques représentatives de chaque événement initial, et vérification d'une cohérence des trajets des individus d'une zone à l'autre à partir de la topographie du lieu, du modèle temporel et des informations temporelles de détection.
   - lorsqu'au moins un événement postérieur, dit résiduel, n'a pu être aggloméré dans un trajet, le procédé comprenant les étapes ultérieures de : identifier des trajets reconstitués considérés comme incomplet à partir de la topographie du lieu, déterminer une probabilité que l'évènement postérieur résiduel suive le dernier évènement postérieur de chaque trajet reconstitué considéré comme incomplet et agglomérer l'évènement postérieur résiduel à un des trajets reconstitués en fonction de cette probabilité.

2. Procédé selon la revendication 1, dans lequel la probabilité que l'évènement postérieur résiduel suive le dernier événement postérieur d'un trajet reconstitué considéré comme incomplet pour former un nouveau trajet reconstitué est le produit de :

   - une probabilité que les caractéristiques représentative de l'évènement postérieur du trajet reconstitué appartiennent au même individu que les caractéristiques représentatives de l'évènement postérieur résiduel à partir d'un modèle des caractéristiques,
- une probabilité qu'un individu passe de la zone du dernier événement postérieur du trajet reconstitué à la zone de l'évènement postérieur résiduel sans avoir été détecté dans une zone intermédiaire.

3. Procédé selon la revendication 2, dans lequel le produit permettant de calculer la probabilité que l'évènement postérieur résiduel suive le dernier évènement postérieur d'un trajet reconstitué comprend également la probabilité qu'un individu passe de la zone du dernier événement postérieur du trajet reconstitué à la zone de l'évènement postérieur résiduel dans le temps séparant l'information temporelle du dernier événement postérieur du trajet reconstitué et l'information temporelle de l'évènement postérieur résiduel.

4. Procédé selon la revendication 2, dans lequel la probabilité qu'un individu passe de la zone du dernier événement postérieur du trajet reconstitué à la zone de l'évènement postérieur résiduel sans avoir été détecté est le produit de :

- une probabilité d'erreur de détection,
- une probabilité qu'un individu passe de la zone du dernier événement postérieur du trajet reconstitué à la zone de l'évènement postérieur résiduel compte tenu d'un historique des trajets reconstitués.

5. Procédé selon la revendication 1, dans lequel, lors des étapes ultérieures, à partir de la topographie sont recherchés des chemins pouvant amener un individu à l'évènement postérieur résiduel en partant du dernier événement postérieur de chaque trajet reconstitué et une densité de probabilités est calculée pour l'ensemble de ces chemins.

6. Procédé selon la revendication 5, dans lequel un chemin est négligé si la probabilité qu'un individu emprunte ce chemin pour passer de la zone du dernier évènement postérieur du trajet reconstitué à la zone de l'évènement postérieur résiduel compte tenu d'un historique des trajets reconstitués est inférieure à un seuil prédéterminé.

7. procédé selon la revendication 1, dans lequel le modèle temporel est basé sur un temps de parcours moyen sur le trajet.

8. Procédé selon la revendication 1, dans lequel les moyens de détection comprennent au moins un capteur biométrique.

9. Procédé selon la revendication 8, dans lequel les moyens de détection comprennent plusieurs capteurs biométriques, les capteurs biométriques étant de types différents pour capturer des caractéristiques biométriques de types différents.

10. Procédé selon la revendication 1, dans lequel les moyens de détection de la première zone sont disposés au voisinage d'un poste de contrôle d'accès dans lequel chaque individu doit présenter un document d'identification.

11. Procédé selon la revendication 1, dans lequel les caractéristiques représentatives détectées dans chaque zone sont mémorisées.

12. Dispositif de suivi d'individus dans un lieu ayant des zones équipées de moyens de détection d'individus et dont certaines sont inaccessibles directement depuis d'autres zones, le dispositif de suivi comprenant une unité informatique de traitement qui est reliée aux moyens de détection et qui est agencée pour traiter des données transmises par les moyens de détection, l'unité de traitement ayant une mémoire contenant une topographie du lieu et un modèle temporel mettant en relation un temps de parcours et au moins un trajet entre les zones et exécutant un programme de mise en oeuvre du procédé selon l'une quelconque des relations précédentes.

Fig. 1

Fig. 2

Europäisches
Patentamt

European
Patent Office

Office européen
des brevets

**RAPPORT DE RECHERCHE EUROPEENNE**

Numéro de la demande

EP 16 16 0003

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JAVED ET AL: "Modeling inter-camera space-time and appearance relationships for tracking across non-overlapping views", COMPUTER VISION AND IMAGE UNDERSTANDING, ACADEMIC PRESS, US, vol. 109, no. 2, 10 janvier 2008 (2008-01-10), pages 146-162, XP022416212, ISSN: 1077-3142, DOI: 10.1016/J.CVIU.2007.01.003 * figures 3,8a * * page 147, section 1.1 * * page 149, section 3 * *pages 153-154, section 6 * ----- | 1,5-12 | INV. G01S5/16 G06T7/00 |
| X | KETTNAKER V ET AL: "Bayesian Multi-camera Surveillance", PROCEEDINGS OF THE 1999 IEEE COMPUTER SOCIETY CONFERENCE ON COMPUTER VISION AND PATTERN RECOGNITION, JUNE 23-25, 1999; FORT COLLINS, COLORADO, IEEE, THE INSTITUTE OF ELECTRICAL AND ELECTRONICS ENGINEERS, INC, US, vol. 2, 23 juin 1999 (1999-06-23), pages 253-259, XP010347523, ISBN: 978-0-7695-0149-9 * figures 1,2 * * page 253-254, sections 1 and 2* * pages 257-258, section 5 * ----- | 1,5-12 | |
| A | FR 2 943 878 A1 (THALES SA [FR]) 1 octobre 2010 (2010-10-01) * le document en entier * ----- | 1-12 | DOMAINES TECHNIQUES RECHERCHES (IPC) G01S G06T |
| A | EP 1 927 947 A1 (MITSUBISHI ELECTRIC CORP [JP]) 4 juin 2008 (2008-06-04) * le document en entier * ----- | 1-12 | |

Le présent rapport a été établi pour toutes les revendications

| Lieu de la recherche | Date d'achèvement de la recherche | Examinateur |
|---|---|---|
| Munich | 22 juin 2016 | Hekmat, Taymoor |

## ANNEXE AU RAPPORT DE RECHERCHE EUROPEENNE
## RELATIF A LA DEMANDE DE BREVET EUROPEEN NO.

EP 16 16 0003

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-06-2016

| Document brevet cité au rapport de recherche | Date de publication | Membre(s) de la famille de brevet(s) | Date de publication |
|---|---|---|---|
| FR 2943878 A1 | 01-10-2010 | AUCUN | |
| EP 1927947 A1 | 04-06-2008 | AUCUN | |

EPO FORM P0460

Pour tout renseignement concernant cette annexe : voir Journal Officiel de l'Office européen des brevets, No.12/82